# DEMANDE DE BREVET EUROPEEN

(11) **EP 1 213 526 A1**
(43) Date de publication de la demande: **12.06.2002**
(21) Numéro de dépôt: 00870291.2
(22) Date de dépôt: 06.12.2000
(51) Int. Cl.: F16L 55/11, B65D 59/06, F16L 47/00, B29C 65/00

(54) **Procédé et moyens pour intégrer un embout métallique à un tube en matériau composite**

(71) Demandeur: Techspace Aero S.A., 4041 Herstal (BE)
(72) Inventeur: Damhaut, Luc, 4050 Ninane (BE); Defloo, Yves, 4031 Angleur (BE)
(74) Mandataire: Van Malderen, Joelle

(57) **Abrégé**

La présente invention se rapporte à un procédé pour assembler un tube composite (1) et un embout métallique (2), ledit embout métallique (2) étant constitué d'un plateau (3) et d'un corps creux (4), ledit corps (4) présentant en surface un filetage mâle (9) et ledit tube composite (1) présentant un filetage femelle (13) correspondant, comprenant les étapes suivantes :
- on applique de la colle (10) au niveau de la partie filetée (9) du corps creux (4) de l'embout métallique (2),
- on introduit l'embout (2) dans le tube (1),
- on visse par un mouvement de pénétration en rotation l'embout métallique (2) à l'intérieur du tube (1) de manière à former une jonction tube-embout métallique,
- la colle (10) ainsi tapissée sur la partie filetée (9) de l'embout (2) diffuse en se répartissant au niveau de la partie filetée (13) du tube (1) et le surplus est collecté dans la poche (11) présente dans l'embout métallique (2).
La présente invention se rapporte également audit embout métallique (2).

## Description

### Objet de l'invention

La présente invention se rapporte à un procédé d'assemblage de deux pièces présentant des coefficients de dilatation différents comme par exemple un tube composite et un embout métallique.

La présente invention se rapporte également aux moyens utilisés pour mettre en oeuvre ledit procédé d'assemblage et en particulier aux moyens présents sur chacune des deux pièces.

La présente invention trouve ses applications à la réalisation d'assemblages pouvant être exposés à des conditions extrêmes de pression- et/ou de température, telles que des températures cryogéniques.

### Etat de la technique

En raison de leurs propriétés mécaniques qui les rendent aptes à constituer des éléments de structure, et leur capacité à conserver ces propriétés jusqu'à des températures élevées, les matériaux composites sont appréciés dans le domaine de l'aéronautique et tendent à remplacer, lorsque cela est possible, les alliages métalliques. Ils sont utilisés pour réaliser des structures exposées à des flux thermiques très élevés ou des conditions agressives aux très hautes températures telles que des structures de paroi de chambre de combustion de réacteurs ou moteurs-fusées.

Les matériaux composites utilisés sont notamment les matériaux composites carbone/carbone comprenant un renfort en fibres de carbone densifié par une matrice en carbone et les matériaux composites à fibre céramique comprenant un renfort- en fibres réfractaires densifié par une matrice céramique.

Il existe différentes façons d'assembler deux pièces. On peut ainsi préparer les pièces en les entaillant de façon à ce qu'elles s'interpénètrent, par exemple en queue d'aronde, par tenon et mortaise, par rainure ou par enture, puis les assembler de manière à former un assemblage démontable ou non. Un assemblage démontable peut être maintenu en place par des vis, des boulons, des goujons avec écrous, à l'aide d'une clavette, par des manchons, par des raccords ou encore par des brides. A l'inverse, les pièces à assembler selon un assemblage non démontable sont habituellement réunies par soudage, par brasage ou par rivetage.

Dans le cas particulier de la solidarisation d'un tube composite et donc creux sur un embout métallique, l'assemblage de ces deux pièces de compositions différentes et donc présentant des coefficients de dilation différents, peut être réalisé par vissage.

Cependant, ce type d'assemblage présente l'inconvénient de ne plus être correctement assuré si l'on fait varier de façon importante les conditions de température et/ou de pression, en particulier lorsque l'on passe à des températures cryogéniques.

En particulier, dans le cas d'une utilisation dans des conditions de température élevée, l'ensemble subit des contractions différentielles sur le tube réalisé dans un matériau composite et l'embout métallique, ce qui engendre un risque de rupture.

### Buts de l'invention

La présente invention vise à fournir un procédé et des moyens qui permettent d'assurer l'assemblage de deux pièces qui sont d'une part un tube réalisé en matériau composite et d'autre part un embout métallique.

La présente invention vise en particulier à fournir un procédé et des moyens qui permettent d'assurer l'assemblage de ces deux pièces dans des conditions extrêmes, y compris pour des températures cryogéniques.

### Résumé de l'invention

La présente invention se rapporte à un procédé pour assembler un tube composite et un embout métallique, ledit embout métallique étant constitué d'un plateau et d'un corps creux, ledit corps présentant en surface un filetage mâle et ledit tube composite présentant un filetage femelle correspondant, comprenant les étapes suivantes :
- on applique de la colle au niveau de la partie filetée du corps creux de l'embout métallique,
- on introduit l'embout dans le tube,
- on visse par un mouvement de pénétration en rotation l'embout métallique à l'intérieur du tube de manière à former une jonction tube-embout métallique,
- la colle ainsi tapissée sur la partie filetée de l'embout diffuse en se répartissant au niveau de la partie filetée du tube et le surplus est collecté dans la poche présente dans l'embout métallique.

La présente invention se rapporte également à un embout métallique comprenant un plateau et un corps creux, ledit corps creux présentant une poche et sur sa partie supérieure une partie filetée.

De préférence, ledit embout métallique est telle que l'extrémité du corps creux opposée au plateau se présente sous forme biseautée.

### Brève description des figures

La figure 1 représente une vue générale de l'assemblage d'un embout métallique dans un tube composite selon la présente invention.

La figure 2 représente une vue détaillée de la façon dont cet assemblage est réalisé.

### Description d'une forme d'exécution préférée de l'invention

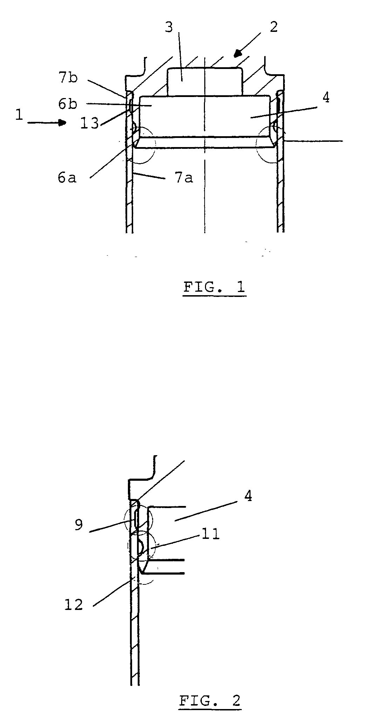

L'assemblage comme illustré à la figure 1 se rapporte à la solidarisation d'un tube composite 1 creux sur un embout métallique 2. Ce tube composite 1 présente une paroi interne 7a et une paroi externe 7b.

L'embout métallique 2 est constitué d'un plateau 3 et d'un corps creux 4. Ledit corps creux 4 se présente en deux parties, une partie inférieure 6a et une partie supérieure 6b.

De préférence, la partie supérieure 6b présente une partie filetée 9 (filetage mâle) destinée à recevoir la partie filetée 13 correspondante présente sur la face interne 7a du tube 1 (filetage femelle).

L'assemblage des deux pièces 1 et 2 se fait par pénétration puis rotation de l'embout métallique 2 par sa partie inférieure 6a dans ledit tube composite 1, comme le montre la figure 2. Cette solidarisation est renforcée par la présence de colle 10 autour du pas de vis de la partie filetée 9 de l'embout métallique 2 et autour de la partie filetée 13 du tube 1, ainsi que par la présence d'une poche 11 à l'intérieur de l'embout métallique 2, au niveau de la jonction tube-embout, ladite poche 11 étant destinée à recevoir le surplus de colle à l'intérieur de la jonction tube 1-embout 2 et à créer un obstacle supplémentaire à une éventuelle désolidarisation de l'ensemble. De préférence, la colle 10 utilisée est à base de résine époxyde bicomposante.

En outre, la partie inférieure du corps creux 4 de l'embout métallique présente des extrémités biseautées 12 afin de faciliter l'introduction de l'embout 2 dans le tube 1.

La présence de ces extrémités biseautées 12 dans la partie inférieure du corps 4 de l'embout 2 permet en outre de limiter les contraintes dues aux contractions différentielles lors de l'utilisation d'un tel assemblage aux températures cryogéniques.

De manière pratique, on procède de la façon suivante:
- on applique de la colle 10 au niveau de la partie filetée 9 du corps creux 4 de l'embout métallique 2,
- on introduit l'embout 2 dans le tube 1;
- on visse (mouvement de pénétration par rotation) l'embout métallique 2 à l'intérieur du tube 1 de manière à former la jonction tube-embout métallique,
- une partie de la colle se répartit par division autour du pas de vis de la partie filetée 9 de l'embout 2 et de la partie filetée 13 du tube 1, le reste étant collecté dans la poche 11 prévue à cet effet sur l'embout métallique 2.

Un tel assemblage présente plusieurs avantages. Un de ces avantages est que s'il y a rupture de la colle, le risque de désolidarisation est très limité puisque la colle est répartie au niveau des parties filetées 9 et 13, l'excédent étant repris par la poche 11. Un autre avantage est que, dans des conditions extrêmes, les effets de contraction différentielle qui entraînent des contraintes importantes dans la zone d'accostage sont limités par l'existence des extrémités biseautées 12 de la partie inférieure du corps 4 de l'embout 2. En effet, ces extrémités biseautées 12 permettent à l'embout métallique 2 de fléchir, limitant ainsi les contraintes dans le tube composite 1.

## Revendications

1. Procédé pour assembler un tube composite (1) et un embout métallique (2), ledit embout métallique (2) étant constitué d'un plateau (3) et d'un corps creux (4), ledit corps (4) présentant en surface un filetage mâle (9) et ledit tube composite (1) présentant un filetage femelle (13) correspondant, comprenant les étapes suivantes :
- on applique de la colle (10) au niveau de la partie filetée (9) du corps creux (4) de l'embout métallique (2),
- on introduit l'embout (2) dans le tube (1),
- on visse par un mouvement de pénétration en rotation l'embout métallique (2) à l'intérieur du tube (1) de manière à former une jonction tube-embout métallique,
- la colle (10) ainsi tapissée sur la partie filetée (9) de l'embout (2) diffuse en se répartissant au niveau de la partie filetée (13) du tube (1) et le surplus est collecté dans la poche (11) présente dans l'embout métallique (2).

2. Embout métallique comprenant un plateau (3) et un corps creux (4), ledit corps creux (4) présentant une poche (11) et sur sa partie supérieure une partie filetée (9).

3. Embout métallique selon la revendication 2, **caractérisé en ce que** l'extrémité du corps creux (4) opposée au plateau (3) se présente sous forme biseautée (12).

## Revendications modifiées

### Revendications modifiées conformément à la règle 86(2) CBE.

**1.** Procédé pour assembler un tube composite (1) et un embout métallique (2), ledit embout métallique (2) étant constitué d'un plateau (3) et d'un corps creux (4), ledit corps creux (4) présentant en surface d'une part une poche (11) et d'autre part un filetage mâle (9), et ledit tube composite (1) présentant un filetage femelle (13) correspondant, comprenant les étapes suivantes:
- on applique de la colle (10) au niveau de la partie filetée (9) du corps creux (4) de l'embout métallique (2),
- on introduit l'embout (2) dans le tube (1),
- on visse par un mouvement de pénétration en rotation l'embout métallique (2) à l'intérieur du tube (1) de manière à former une jonction tube-embout métallique,
- la colle (10) ainsi appliquée sur la partie filetée (9) de l'embout (2) diffuse en se répartissant au niveau de la partie filetée (13) du tube (1) et le surplus est collecté dans la poche (11) présente dans l'embout métallique (2).

**2.** Procédé selon la revendication 1, **caractérisé en ce qu'**il comprend une étape préalable au cours de laquelle on procède au niveau de l'embout métallique (2) au biseautage de l'extrémité (12) du corps creux (4) opposée au plateau (3).

**3.** Procédé selon la revendication 1 ou 2, **caractérisé en ce que** la colle appliquée (10) est à base de résine époxyde bicomposante.
